Europäisches Patentamt

European Patent Office

Office européen des brevets

(19)

(11) Veröffentlichungsnummer: **0 230 293 B1**

(12) # EUROPÄISCHE PATENTSCHRIFT

(45) Veröffentlichungstag der Patentschrift: **11.12.91**

(51) Int. Cl.⁵: **A21C 9/08**, A21C 15/00

(21) Anmeldenummer: **87100580.7**

(22) Anmeldetag: **17.01.87**

(54) Vorrichtung zum Umsetzen von Gebäckstücken.

(30) Priorität: **23.01.86 DE 3601904**

(43) Veröffentlichungstag der Anmeldung:
**29.07.87 Patentblatt 87/31**

(45) Bekanntmachung des Hinweises auf die
Patenterteilung:
**11.12.91 Patentblatt 91/50**

(84) Benannte Vertragsstaaten:
**DE ES FR GB IT NL**

(56) Entgegenhaltungen:
**DE-A- 1 302 082**
**DE-A- 2 736 211**
**DE-A- 3 045 867**
**GB-A- 2 079 260**
**US-A- 4 442 657**

(73) Patentinhaber: **Werner & Pfleiderer GmbH**
**Theodorstrasse 10 Postfach 30 12 20**
**W-7000 Stuttgart 30(DE)**

(72) Erfinder: **Wolff, Manfred, Dipl.-Ing.**
**Brückenstrasse 34**
**W-7056 Weinstadt 3(DE)**

## Beschreibung

Die Erfindung bezieht sich auf eine Vorrichtung nach dem Oberbegriff des Anspruches 1.

In kontinuierlich arbeitenden Anlagen zur Herstellung von Gebäckstücken, wie beispielsweise Biskuits, werden diese ab ihrer Entstehungsstelle, die von einer Ausstechmaschine, einer Gebäckformmaschine, einem Extruder oder einer Dressiervorrichtung gebildet sein kann, in einer Vielzahl exakt geordneter Längsreihen durch den Backofen bis zu den automatisch arbeitenden Verpackungsmaschinen gefördert. Letzteren werden die Gebäckstücke von den einzelnen Längsreihen kolonnenweise zugeführt, wobei jede Kolonne dieselbe Anzahl Gebäckstücke enthält, aus welcher dann ein Paket gebildet wird. Nun kommt es häufig vor, daß die Gewichte der Gebäckstücke in verschiedenen Längsreihen voneinander abweichen, beispielsweise deshalb, weil die Gebäckstücke in den seitlichen Randzonen des Durchlaufbackofens stärker ausgebacken sind als die anderen. Gewichtsabweichungen können aber auch bereits bei der Herstellung der Gebäckstücke durch Ausstechen oder Ausformen entstanden sein. So kann das für das Ausstechen erforderliche Teigband in Querrichtung Unterschiede aufweisen, die z.B. zurückzuführen sind auf die mechanische Durchbiegung der Teigbandformwalzen, auf spezifische Veränderungen des Teiges an den seitlichen Trichterwänden des Teigbandwalzwerkes, auf Verdichtung des Teiges an den Seiten des Teigbandes oder auf ungenügendes Nachfließen des Teiges an den Seitenwänden des Trichters. Schließlich kann die Ursache für die Ungleichmäßigkeit der Gebäckstücke auch in einer unterschiedlichen Verteilung von Zusätzen im Teig, wie beispielsweise Nüssen, Schokoladestückchen oder dgl. gelegen sein. Aus den unterschiedlichen Gewichten der Gebäckstücke in verschiedenen Längsreihen ergeben sich demzufolge am Ausgang der Verpackungsmaschinen Pakete mit stark unterschiedlichen Gewichten und/oder unterschiedlicher Paketlänge bei jeweils gleicher Anzahl von Gebäckstücken pro Paket. Weil die Gewichte der Pakete das gesetzlich vorgeschriebene Mindestgewicht nicht unterschreiten dürfen, hat man aus Sicherheitsgründen mit mehr Übergewicht verpackt, als es nach dem durchschnittlichen Gewicht der Gebäckstücke notwendig wäre.

Um dem vorstehend beschriebenen Nachteil zu begegnen, ist es bereits bekannt, die Gebäckstücke durch Umordnen zu mischen. Zu diesem Zweck ist bei einer aus der DE-OS 33 38 o68 bekannten Vorrichtung ein erster Förderer vorgesehen, der an einer Übergabekante die Gebäckstücke einem zweiten, quer zur Förderrichtung des ersten Förderers angeordnete Transportkanäle aufweisenden Förderer übergibt. Dabei bilden die auf dem ersten Förderer in Querreihen befindlichen Gebäckstücke in den Transportkanälen des zweiten Förderers Längsreihen. Werden nun aus einer Längsreihe des zweiten Förderers die Kolonnen zur Beschickung einer Verpackungsmaschine entnommen, dann enthält jede Kolonne Gebäckstücke aus allen Längsreihen des ersten Förderers, wodurch innerhalb eines Pakets etwaige Unterschiede in den Gewichten der Gebäckstücke weitgehend ausgeglichen sind.

Die Übergabe der Gebäckstücke vom ersten auf den zweiten Förderer erfolgt bei der bekannten Vorrichtung dadurch, daß die Übergabekante des ersten Förderers über dem zweiten Förderer quer hin-und herbewegt wird. Sobald die Gebäckstücke auf dem ersten Förderer an die Übergabekante gelangt sind, fallen sie in einer Kippbewegung auf den zweiten Förderer. Dabei besteht nicht nur die Gefahr, daß die Gebäckstücke hochkant auf dem zweiten Förderer aufschlagen und dadurch beschädigt werden, sie können sich sogar beim Kippen überschlagen und dann auf der falschen Seite liegen, wodurch unter Umständen der Verpackungsvorgang beeinträchtigt wird. Die genaue Ordnung der Gebäckstücke wird durch die nicht immer gleichzeitig erfolgende Kippbewegung erheblich gestört, weshalb zur erneuten Ausrichtung auf dem zweiten Förderer besondere Führungen erforderlich sind. Wegen der bei der Hin-und Herbewegung der Übergabekante in den damit verbundenen Antriebs- und Vorrichtungsteilen auftretenden hohen Massekräften ist die Geschwindigkeit der Übergabe nach oben begrenzt. Die bekannte Vorrichtung ist deshalb bei mit großem Durchsatz arbeitenden Hochleistungsanlagen nicht einsetzbar.

Aus der DE-PS 503 471 ist eine Vorrichtung bekannt, bei welcher mittels eines endlosen luftdurchlässigen Bandes, das mit einer Saugvorrichtung zusammenarbeitet, Biskuits oder dgl. von einem ersten Förderer abgehoben und auf einen in gleicher Richtung wie der erste Förderer bewegten zweiten Förderer abgesetzt werden. Dieses bekannte Saugförderband ermöglicht lediglich einen einfachen Übertragungsvorgang, bei dem kein gezieltes Umordnen und auch kein Mischen der Biskuits stattfindet.

Die US-PS 3 17o 581 zeigt einen Entkapsler, bei dem ein mit Saugnäpfen versehenes Förderband dazu verwendet wird, um Brotlaibe aus auf einem ersten Förderer befindlichen Kapseln herauszuheben und auf einen zweiten, oberhalb des ersten Förderers in gleicher Richtung bewegten Förderer abzusetzen. Bei diesem Entkapseln erfolgt weder ein geordnetes Umsetzen noch ein Mischen der Gebäckstücke.

Ferner ist aus der US-A 4 442 657, die alle Merkmale des Oberbegriffes des Anspruches 1 enthält, ein Umsetzen von in einer Reihe auf einem Förderband in unregelmäßigen Abständen transportierten Gebäckstücken auf ein quer dazu angeordnetes Förderband mittels eines Sagluftförderbandes bekannt. Hierbei werden mittels Fotozellen gesteuert die Gebäckstücke vom ersten Förderband gezielt mittels Saugnäpfen entnommen und nach dem Transport über das zweite Förderband durch kurzzeitige Unterbrechung der Saugwirkung in auf dem zweiten Förderband befindliche Behälter einzeln abgelegt.

Mit dieser Vorrichtung erfolgt kein Mischen der Gebäckstücke und es ist nur eine geringe Durchsatzleistung möglich.

Durch das querreihenweise Abheben der Gebäckstücke mittels Saugluft vom ersten Förderer erfolgt eine schonende Handhabung unter Aufrechterhaltung der exakten Ordnung der Gebäckstücke. Das Absetzen auf den zweiten Förderer geschieht ohne Veränderung der Lage der einzelnen Gebäckstücke gezielt und stets zur gleichen Zeit, so daß die exakte Ordnung der Gebäckstücke auch auf dem zweiten Förderer erhalten bleibt. Mit der erfindungsgemäßen Vorrichtung wird ebenfalls eine hohe Durchsontsleistung ermöglicht. Diese Aufgabe wird mit des, Merkmalen des Kennzeichens des Anspruches 1 gelöst.

Weitere Vorteile und Merkmale der Erfindung ergeben sich aus den Unteransprüchen und der nachfolgenden Beschreibung eines Ausführungsbeispiels anhand der Zeichnungen. Es zeigt

Fig. 1 die teilweise aufgebrochene Draufsicht auf eine Vorrichtung zum Umsetzen von Gebäckstücken, insbesondere Biskuits,

Fig. 2a-c stark vereinfachte Längsschnitte nach der Linie II-II in Fig. 1 mit verschiedenen Arbeitsstellungen der Vorrichtung,

Fig. 3a-c vergrößerte Ausschnitte nach der Linie III-III in Fig. 1 mit unterschiedlichen Arbeitsstellungen von Einzelteilen der Vorrichtung.

Die von der in den Zeichnungen dargestellten Vorrichtung umzusetzenden Gebäckstücke 1, bei denen es sich vorzugsweise um Biskuits handelt, befinden sich zunächst auf einem ersten Förderer 2, der beispielsweise das Transportband eines nicht dargestellten Backofens ist. Auf dem ersten Förderer 2 sind die Gebäckstücke 1 in genau ausgerichteten Längs-und Querreihen geordnet. Diese exakte Ordnung der Gebäckstückreihen ergibt sich bereits bei der Entstehung der Gebäckstücke, die z.B. durch Ausstechen aus einem Teigband erfolgt, und bleibt bis zum Ende des Ofentransportbandes oder eines evtl. daran noch anschließenden Kühltransports erhalten. Im Beispielsfall sind die Gebäckstücke 1 auf dem ersten Förderer 2 in acht Längsreihen angeordnet.

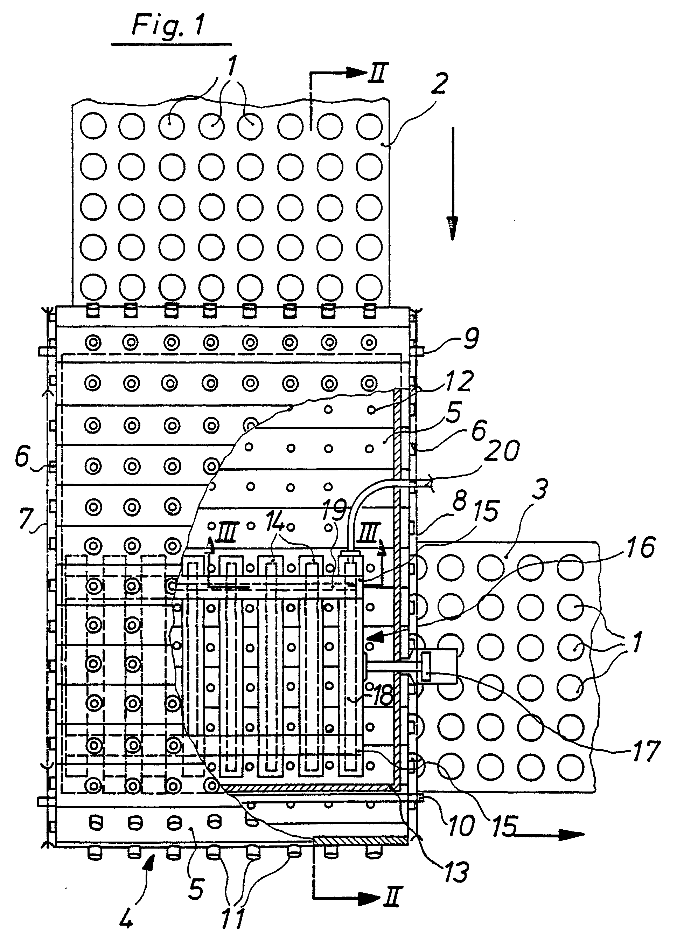

Die auf dem ersten Förderer 2 befindlichen Gebäckstücke 1 werden auf einen zweiten Förderer 3 übertragen, der im rechten Winkel zum ersten Förderer 2 angeordnet ist. Die Förderfläche des zweiten Förderers 3 befindet sich auf einem niedrigeren Niveau als die Förderfläche des ersten Förderers. Der zweite Förderer 3 ist beim Ausführungsbeispiel ein Transportband, welches die Gebäckstücke 1 zu einer oder mehreren Verpackungsmaschinen befördert. Damit die Gebäckstücke 1 den Verpackungsmaschinen richtig zugeführt werden, müssen sie auf dem zweiten Förderer 3 ebenfalls exakt in Längs-und Querreihen ausgerichtet sein. Wie aus Fig. 1 ersichtlich ist, sind beim Ausführungsbeispiel die Gebäckstücke 1 auf dem zweiten Förderer 3 in sechs Längsreihen angeordnet.

Die Vorrichtung zum Umsetzen der Gebäckstücke 1 weist ein endloses Saugförderband 4 auf, welches oberhalb der beiden Förderer 2,3 angeordnet ist und über die gesamte Breite des zweiten Förderers 3 geführt ist. Das Saugförderband 4 ist als Plattenband gestaltet, welches aus einer Vielzahl von quer zur Förderrichtung sich erstreckenden und mit ihren Seitenkanten dicht aneinanderstoßenden Platten 5 besteht. Zur Verbesserung der Dichtheit können die Seitenkanten der Platten 5 mit längs verlaufenden Absätzen, die sich gegenseitig überlappen, versehen sein, was aber in den Zeichnungen nicht veranschaulicht ist. Die Platten 5 sind mittels an ihren Stirnseiten angebrachten Haltern 6 an den Laschen von zu beiden Seiten des Saugförderbandes 4 angeordneten und durch strichpunktierte Linien angedeuteten Laschenketten 7 und 8 befestigt. Die Laschenketten laufen über Kettenräder, die auf den Wellen 9,10 angeordnet sind und von denen eine mit einem nicht dargestellten Antrieb in Verbindung steht. Von der Darstellung eines die Wellen tragenden Gestells wurde der übersichtlichkeit halber abgesehen. Gleichfalls nicht dargestellt ist eine automatische Einrichtung zur Nachführung der gesamten Umsetzvorrichtung an einen etwaigen Versatz der Gebäcklängsreihen auf dem ersten Förderer, welcher durch einen seitlichen Ablauf des Backofenbandes hervorgerufen sein kann.

Auf den Platten 5 befindet sich je eine Reihe nach außen gerichteter Saugnäpfe 11, deren Anzahl und Stellung innerhalb dieser Reihen jeweils der Zahl und Anordnung der Gebäckstücke 1 einer Querreihe auf dem ersten Förderer 2 entspricht. Das Innere jedes Saügnapfes 11 steht mit einer die Platte 5 durchdringenden Öffnung 12 in Verbindung. In dem von dem Saugförderband 4 umgebenen Raum ist eine Saugluftkammer 13 vorgesehen, deren öffnung sich über nahezu die gesamte Fläche des Untertrums des Saugförderbandes 4 erstreckt und von diesem abgedeckt ist. Ein nicht dargestelltes Sauggebläse sorgt dafür, daß in der Saugluftkammer 13 stets ein für die Funktion des Saugförderbandes 4 erforderlicher Unterdruck herrscht.

Innerhalb der Saugluftkammer 13 ist längs eines über dem zweiten Förderer 3 gelegenen Abschnitts eine Einrichtung zur zeitweisen Unterbrechung der Sauglufteinwirkung auf die Saugnäpfe 11 vorgesehen. Diese Einrichtung besteht aus einer der Zahl der Längsreihen von Saugnäpfen 11 entsprechenden Anzahl von Längsstäben 14 (im Ausführungsbeispiel sind es acht), die mittels zweier Querstäbe 15 zu einem Rost 16 zusammengefaßt sind. Dieser Rost ist durch eine pneumatisch betätigbare Kolben-Zylinder-Anordnung 17 quer zur Bewegungsrichtung des Saugförderbandes 4 verschiebbar. Die Längsstäbe 14 erstrecken sich in Förderrichtung auf der Rückseite des Untertrums des Saugförderbandes 4. Ihre Breite und ihr gegenseitiger Abstand ist größer bemessen als die Weite der Öffnungen 12 in den Platten 5. Entlang ihrer den Platten 5 aufliegenden Unterseiten weisen die Längsstäbe 14 je eine Nut 18 auf. Die Nuten 18 stehen über ein in einem Querstab 15 enthaltenes Kanalsystem 19 untereinander und über eine Leitung 20 mit einer nicht dargestellten Blasluftquelle in Verbindung.

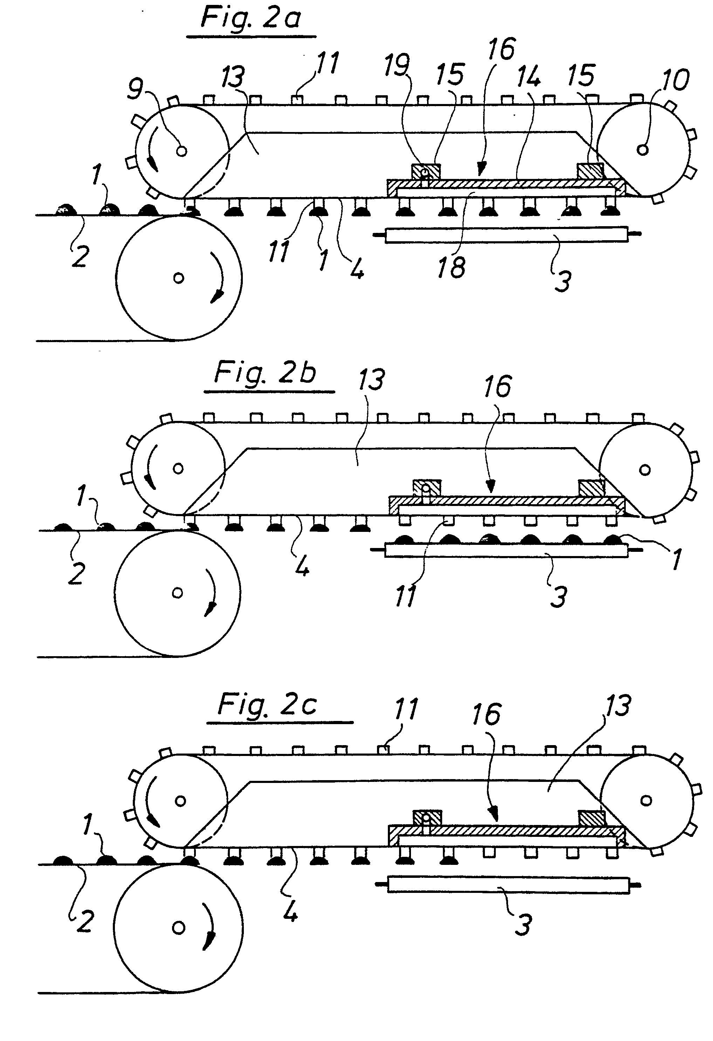

Das beim Betrieb der oben beschriebenen Vorrichtung ablaufende Verfahren ist in den Fig. 2a-c dargestellt: Von den Saugnäpfen 11 des in gleicher Richtung und mit gleicher Geschwindigkeit wie der Förderer 2 bewegten Saugförderbandes 4 werden die jeweils in einer Querreihe auf dem Förderer 2 befindlichen Gebäckstücke 1 erfaßt und von der Oberfläche des Förderers 2 abgehoben. Damit die in gleicher Ordnung wie die Gebäckstücke 1 vorgesehenen Saugnäpfe 11 stets mit einem Gebäckstück in Kontakt kommen, ist eine nicht dargestellte elektronische Gleichlauf-Regulierung mit einem die Gebäckstücke auf dem Förderer 2 abtastenden Fühler vorgesehen, die dafür sorgt, daß die Geschwindigkeit des Saugförderbandes 4 stets der Geschwindigkeit des Förderers 2 entspricht. Die an den Saugnäpfen 11 des Saugförderbandes 4 haftenden Gebäckstücke 1 werden mit der Bewegung des Saugförderbandes bis über den zweiten Förderer 3 transportiert (Fig.2a). Sobald sich die gewünschte Anzahl von Gebäckstückquerreihen über dem Förderer 3 befindet, wird kurzfristig die Saugufteinwirkung in diesem Bereich des Saugförderbandes 4 unterbrochen und gegebenenfalls Blasluft in die Saugnäpfe 11 geleitet. Dadurch werden die Gebäckstücke aller über dem Förderer 3 befindlichen Querreihen gleichzeitig abgesetzt. Dabei gelangen die Gebäcksücke 1 in genau derselben Ordnung, wie sie vom ersten Förderer 2 abgehoben wurden, auf den zweiten Förderer 3 (Fig. 2b). Weil die Saugufteinwirkung nur für einen kurzen Zeitraum unterbrochen wurde, kann sich der Transport weiterer Querreihen von Gebäckstücken über den zweiten Förderer 3 ohne Unterbrechung fortsetzen (Fig. 2c). Nach dem Absetzen werden die Gebäckstücke 1 auf dem zweiten Förderer 3 im rechten Winkel zu ihrer bisherigen Förderrichtung weitertransportiert, wobei die vorher auf dem ersten Förderer 2 in Querreihen befindlichen Gebäckstücke 1 nun auf dem zweiten Förderer 3 Längsreihen bilden. Dadurch kommt die angestrebte Mischung der Gebäckstücke zustande.

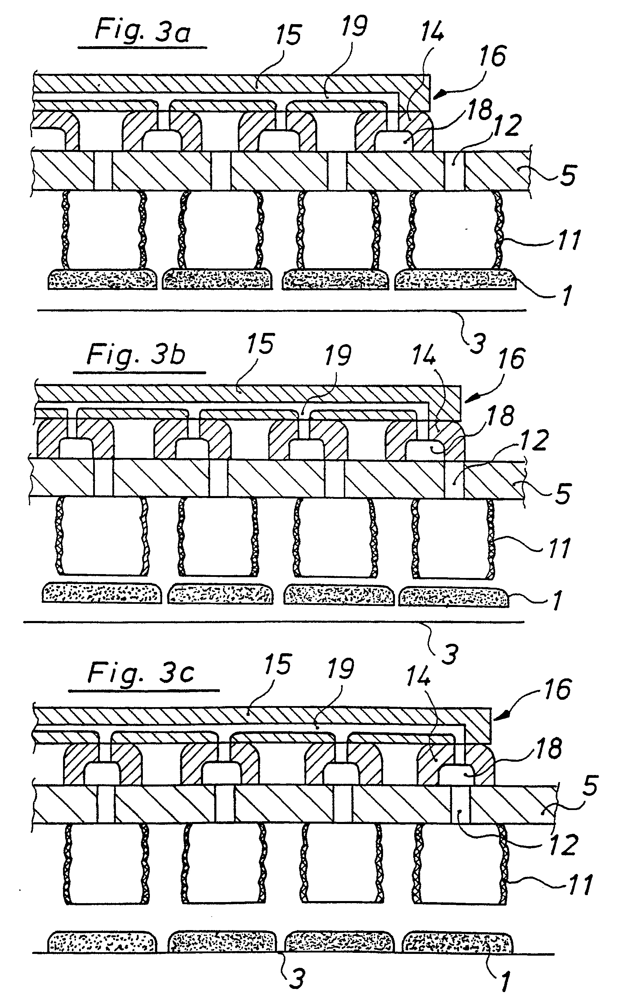

In den Fig. 3a-c ist dargestellt, wie die zeitweise Unterbrechung der Saugufteinwirkung zustande kommt: Die Ruhestellung des Rostes 16 ist in Fig. 3a veranschaulicht. Die Längsstäbe 14 befinden sich auf der Rückseite der Platten 5 jeweils zwischen zwei nebeneinandergelegenen Öffnungen 12, wodurch die Saugluft ungehindert auf die Saugnäpfe 11 einwirken und die Gebäckstücke 1 an denselben festhalten kann. Beim Verschieben des Rostes 16 quer zur Förderrichtung des Saugförderbandes 4 mittels der Kolben-Zylinder-Anordnung 17 (Fig. 1) decken die Längsstäbe 14 die Öffnungen 12 zu, wodurch die Saugufteinwirkung auf die Saugnäpfe 11 unterbrochen wird (Fig.3b). Die Gebäckstücke 1 lösen sich infolgedessen von den Saugnäpfen 11 und beginnen ihre Absetzbewegung. Wird der Rost 16 noch weiter nach rechts verschoben, korrespondieren die Nuten 18 in der Unterseite der Längsstäbe 14 mit den Öffnungen 12 (Fig. 3c). Nun gelangt über das im Querstab 15 enthaltene Kanalsystem 19 Blasluft in die Saugnäpfe 11. Die Beaufschlagung mit Blasluft sorgt für ein sofortiges Ablösen der Gebäckstücke 1 von den Saugnäpfen 11 und beschleunigt das Absetzen der Gebäckstücke auf den zweiten Förderer 3. Die Ordnung der Gebäckstücke störende Verzögerungen des Absetzens werden dadurch mit Sicherheit verhindert. Sofort nach Erreichen der in Fig. 3c gezeigten Stellung bewegt sich der Rost 16 nach links bis in seine Ruhestellung gemäß Fig. 3a, so daß sich die Blaslufteinwirkung auf die Abgabe eines kurzen Luftstoßes beschränkt.

Der Impuls zum Verschieben des Rostes 16 wird von einer nicht dargestellten, auf die Kolben-Zylinder-Anordnung 17 einwirkenden elektronischen Steuerung gegeben. Durch entsprechende Einstellung der Steuerung ist es möglich, die Zahl der jeweils gemeinsam auf den zweiten Förderer 3 abzusetzenden Querreihen von Gebäckstücken 1 innerhalb des durch die Breite des Förderers 3 vorgegebenen Maximums zu variieren und auf dem zweiten Förderer 3 je nach Bedarf eine unterschiedliche Zahl von Gebäckstücklängsreihen zu bilden.

**Patentansprüche**

1. Vorrichtung zum Umsetzen von Gebäckstücken, insbesondere Biskuits von einem ersten Förderer (2) auf einen quer dazu angeordneten zweiten Förderer (3) mittels eines oberhalb der beiden Förderer (2,3) parallel zur Förderrichtung des ersten Förderers (2) bewegbaren und über die gesamte Breite des zweiten Förderers (3) führbaren endlosen Saugförderband (4), dessen Saugnäpfe (11) mit einer Saugluftkammer (13) in Verbindung stehen, in der über den Abschnitt des zweiten Förderbandes eine Einrichtung zur zeitweisen Unterbrechung der Saugluftwirkung angeordnet ist, dadurch gekennzeichnet, daß die Saugnäpfe (11) in Querreihen auf dem Saugförderband (4) angeordnet sind und somit fortlaufend Gebäckstücke (1) in Querreihen vom ersten Förderer (2) entnommen werden und auf Längsreihen auf der zweiten Förderer abgegeben werden können und daß die Einrichtung zur zweitweisen Unterbrechung der Sauglufteinwirkung aus einer der Zahl der Längsreihen von Saugnäpfen entsprechenden Anzahl von zu einem quer verschiebbaren Rost (16) zusammengefaßten Längsstäben (14) besteht, die sich in Förderrichtung auf der Rückseite des Untertrums des Saugförderbandes (4) erstrecken, wobei die Breite der Längsstäbe (14) und deren gegenseitiger Abstand größer als die Weite der Öffnungen (12) bemessen ist.

2. Vorrichtung nach Anspruch 1, dadurch gekennzeichnet, daß das Saugförderband (4) als Plattenband gestaltet ist, auf dessen quer zur Förderrichtung sich erstreckenden Platten (5) die Saugnäpfe (11) angeordnet sind, welche über Öffnungen (12) in den Platten (5) mit der Saugluftkammer (13) in Verbindung stehen.

3. Vorrichtung nach Anspruch 2, dadurch gekennzeichnet, daß die Längsstäbe (14) entlang ihrer Unterseite je eine Nut (18) aufweisen, welche mit einer Blasluftquelle in Verbindung steht.

## Claims

1. Device for the transposing of pieces of patisserie, in particular biscuits, from a first conveyor (2) to a second conveyor (3), which is arranged transversely thereto, by means of an endless suction conveyor belt (4), which is movable above both the conveyors (2, 3) parallelly to the conveying direction of the first conveyor (2) and is guidable over the entire width of the second conveyor (3) and the suction cups (11) of which stand in communication with a suction air chamber (13), in which an equipment for the temporary interruption of the suction air effect is arranged above the portion of the second conveyor belt, characterised thereby, that the suction cups (11) are arranged in transverse rows on the suction conveyor belt (4) and patisserie pieces (1) can thus be continuously removed in transverse rows from the first conveyor (2) and delivered in longitudinal rows onto the second conveyor and that the equipment for the temporary interruption of the suction air effect consists of a number, corresponding to the number of longitudinal rows of suction cups, of longitudinal rods (14), which are assembled into a transversely displaceable grating (16) and extend in conveying direction on the rear side of the lower run of the suction conveyor belt (4), wherein the width of the longitudinal rods (14) and their mutual spacing is dimensioned to be greater than the width of the openings (12).

2. Device according to claim 1, characterised thereby, that the suction conveyor belt (4) is structured as plate belt, on the plates (5) of which extending transversely to the conveying direction are arranged the suction cups (11), which stand in communication with the air suction chamber (13) by way of openings (12) in the plates (5).

3. Device according to claim 2, characterised thereby, that the longitudinal rods (14) each display a respective groove (18), which stands in communication with a source of air blast, along their underside.

## Revendications

1. Appareil pour interchanger des produits de biscuiterie-pâtisserie, en particulier des biscuits, en les faisant passer d'un premier transporteur (2) sur un second transporteur (3), disposé transversalement au précédent, au moyen d'un tapis transporteur (4) à ventouses, sans fin, qui peut se déplacer au-dessus des deux transporteurs (2, 3), parallèlement à la direction de transport du premier transporteur (2), qui peut passer sur toute la largeur du second transporteur (3) et dont les ventouses (11) sont reliées à une chambre sous dépression (13) dans laquelle un dispositif pour interrompre périodiquement l'action de la dépression est disposé au-dessus du tronçon du second tapis transporteur, appareil caractérisé par le fait que les ventouses (11) sont disposées en files transversales au-dessus du tapis transporteur à ventouses (4) et que les produits de biscuiterie (1) peuvent ainsi, en continu, être enlevés, en files transversales, du premier transporteur (2) et déposés, en files longitudinales, sur le second transporteur, et par le fait que le dispositif prévu pour interrompre périodiquement l'action de la dépression est constitué d'un nombre, correspondant au nombre des files longitudinales de ventouses, de barreaux longitudinaux (14) qui sont regroupés pour former une grille (16) pouvant coulisser transversalement et qui s'étendent, dans la direction du transport, sur la face arrière du brin inférieur du tapis transporteur à ventouses (4), la largeur des barreaux longitudinaux (14) et leur distance réciproque étant supérieures au passage libre des ouvertures (12).

2.  Appareil selon la revendication 1, caractérisé par le fait que le tapis transporteur à ventouses (4) est réalisé sous forme de tapis à plaques, sur les plaques (5) duquel, s'étendant transversalement à la direction du transport, sont disposées les ventouses (11), qui sont reliées, par l'intermédiaire des ouvertures (12) ménagées dans les plaques (5), avec la chambre sous dépression (13).

3.  Appareil selon la revendication 2, caractérisé par le fait que les barreaux longitudinaux (14) présentent chacun, le long de leurs faces inférieures, une rainure (18), qui communique avec une source d'air comprimé.

## Fig. 1

Fig. 2a

Fig. 2b

Fig. 2c

_Fig. 3a_   15   19   14   16   18   12   5   11   1

_Fig. 3b_   15   19   14   16   18   12   5   11   1   3

_Fig. 3c_   15   19   14   16   18   5   12   11   3   1